Europäisches Patentamt

European Patent Office

Office européen des brevets

(19)

(11) Veröffentlichungsnummer: **0 054 729**
**A1**

(12) # EUROPÄISCHE PATENTANMELDUNG

(21) Anmeldenummer: 81109376.4

(51) Int. Cl.³: **F 24 D 11/02**, F 24 J 3/02

(22) Anmeldetag: 30.10.81

(30) Priorität: 22.12.80 DE 3048499

(43) Veröffentlichungstag der Anmeldung: 30.06.82
Patentblatt 82/26

(84) Benannte Vertragsstaaten: **AT BE CH FR GB IT LI LU NL
SE**

(71) Anmelder: **Kirchmayer, Hermann, Dorfstrasse 18a,
D-8121 Antdorf (DE)**

(72) Erfinder: **Kirchmayer, Hermann, Dorfstrasse 18a,
D-8121 Antdorf (DE)**

(74) Vertreter: **Patentanwälte Leinweber & Zimmermann,
Rosental 7/II Aufg., D-8000 München 2 (DE)**

(54) **Einrichtung zur Umsetzung von Sonnenenergie in Wärme.**

(57) Die Einrichtung zur Umsetzung von Sonnenenergie in Wärme umfaßt einen Sonnenkollektor aus einer Mehrzahl von an der Außenseite eines Gebäudes od.dgl. festlegbaren, miteinander kuppelbaren, an ein Wärmeträgerfluidnetz anschließbaren Kollektorelementen (1). Diese Elemente weisen jeweils einen Wärmeträgerfluid-Kanal (7) mit einer transparenten Abdeckung (8) auf. Zur effektiven Wärmegewinnung ist der Wärmeträgerfluid-Kanal (7) aus einer Normalbetriebsstellung, in der er mit einem Energiespeicher (16) verbunden ist, bei Unterschreiten einer vorbestimmten, mittels eines dem Wärmefluid-Kanal zugeordneten Temperaturfühlers (23) festgestellten Mindesttemperatur des zirkulierenden Wärmeträgerfluids über ein Umsteuerventil (24) vom Energiespeicher (16) trennbar und an einen Energiespeicher (18) für Wärmepumpenbetrieb anschließbar.

EP 0 054 729 A1

0054729

# LEINWEBER & ZIMMERMANN

**PATENTANWÄLTE**

Dipl.-Ing. H. Leinweber (1930–76)
Dipl.-Ing. Heinz Zimmermann
Dipl.-Ing. A. Gf. v. Wengersky

Rosental 7 · D-8000 München 2
2. Aufgang (Kustermann-Passage)
Telefon (089) 2603989
Telex 528191 lepat d
Telegr.-Adr. Leinpat München

den 30. OKT. 1981

Unser Zeichen ZC

Hermann Kirchmayer, Ing. (grad.), 8121 Antdorf

Einrichtung zur Umsetzung von Sonnenenergie in Wärme

Die Erfindung bezieht sich auf eine Einrichtung zur Umsetzung von Sonnenenergie in Wärme, mit einem Sonnenkollektor aus einer Mehrzahl von an der Außenseite eines Gebäudes od.dgl. festlegbaren, miteinander kuppelbaren, an ein Wärmeträgerfluidnetz anschließbaren Kollektorelementen, die jeweils einen Wärmeträgerfluid-Kanal mit einer transparenten Abdeckung umfassen.

Bei bekannten Einrichtungen dieser Art hat es sich als nachteilig herausgestellt, daß zwar während der Jahreszeitabschnitte, in denen die Wärmeträgerfluid-Temperatur oberhalb eines bestimmten Wertes liegt, Energie gewonnen werden kann, jedoch bei Unterschreiten einer Mindesttemperatur eine Abschaltung der Einrichtung erforderlich ist.

Der Erfindung liegt die Aufgabe zugrunde, die vorbekannte Einrichtung so weiter auszubilden, daß auch bei Schlechtwetter-

-2-

verhältnissen bzw. relativ niedrigen Temperaturen Energie gewinnbar ist.

Die Einrichtung nach der Erfindung, bei der diese Aufgabe gelöst ist, zeichnet sich im wesentlichen dadurch aus, daß der Wärmeträgerfluid-Kanal aus einer Normalbetriebsstellung, in der er mit einem Exergiespeicher verbunden ist, bei Unterschreiten einer vorbestimmten, mittels eines dem Wärmeträgerfluid-Kanal zugeordneten Temperaturfühlers festgestellten Mindesttemperatur des zirkulierenden Wärmeträgerfluids über ein Umsteuerventil vom Exergiespeicher trennbar und an einen Anergiespeicher für Wärmepumpenbetrieb anschließbar ist.

Auf diese vorteilhafte Weise ist sichergestellt, daß dem Exergiespeicher nur Wärmeträgerfluid zugeführt wird, dessen Temperatur einen bestimmten Wert nicht unterschreitet. Weist das zirkulierende Wärmeträgerfluid eine geringere Temperatur als die Mindesttemperatur auf, kann die wenn auch geringe gewonnene Wärmemenge dennoch ausgewertet werden ; der Wärmepumpenbetrieb stellt nämlich auf elegante Weise eine Anhebung der Temperatur des in den Anergiespeicher eintretenden, eine gewisse nützliche Wärmemenge enthaltenden Wärmeträgerfluids sicher.

Dabei hat es sich als besonders vorteilhaft erwiesen, wenn in weiterer Ausgestaltung der Erfindung der Anergiespeicher mit dem Exergiespeicher über eine Wärmepumpe in Verbindung steht. Die Energie des Wärmeträgerfluids gelangt dann auf dem Umweg über den Anergiespeicher schließlich ebenfalls zum Exergiespeicher.

Als ganz besonders vorteilhaft hat sich die weitere Ausbildung der Einrichtung bei Sonnenkollektorele-

menten erwiesen, die zwei einen etwa rechten Winkel miteinander einschließende geneigte Flächen umfassen, welche mit der Basis einen spitzen Winkel einschließen, wenn erfindungsgemäß die folgenden Merkmale erfüllt sind:

a) die eine der beiden Flächen der Kollektorelemente schließt mit der Basis einen steilen Winkel in der Größenordnung von ca. 60° und die andere einen flachen Winkel in der Größenordnung von ca. 30° ein und

b) jeder der beiden geneigten Flächen ist ein eigener, in einer Ebene gleicher Neigung liegender Wärmeträgerfluid-Kanal zugeordnet, von denen der erste mit seiner geneigten Fläche der Sonne zugewandte Kanal der bei Normalbetrieb mit einem Exergiespeicher verbundene Kanal ist und der zweite, quer zur Sonneneinstrahlung ausgerichtete Kanal über ein wärmeleitendes Medium mit der Umgebungsluft in Berührung steht und über eine zweite, eine Pumpe enthaltende Verbindungsleitung an den Anergiespeicher für Wärmepumpenbetrieb angeschlossen ist.

Erfindungsgemäß ist somit sichergestellt, daß nicht nur jeweils einer der beiden Wärmeträgerfluid-Kanäle zur Gänze der Sonneneinstrahlung ausgesetzt und für die Wärmegewinnung verwendet wird. Es ist vielmehr dafür gesorgt, daß die insbesondere bei stärkerer Luftbewegung vom Wind mitgeführte Wärmeenergie an den zweiten Wärmeträgerfluid-Kanal abgegeben und somit gleichzeitig ausgenutzt wird. Wegen der naturgemäß erforderlichen Ausrichtung des ersten Wärmeträgerfluid-Kanals zur Sonnen- und Südseite hin, erstreckt sich der zweite Wärme-

-4-

trägerfluid-Kanal in Ost-Westrichtung, d.h. in der in unseren Breiten häufigsten Windrichtungen, was einen optimalen Wärmeaustausch begünstigt. Wegen der auf diese Weise gegebenen vorteilhaften Ausnutzungsmöglichkeit beider Wärmeträgerfluid-Kanäle und aufgrund der Tatsache, daß die Kollektorelemente wegen ihrer unterschiedlich steilen Flächen an vertikalen, horizontalen und auch an mehr oder weniger stark geneigten Bauwerksflächen zur Erzielung optimaler Arbeitsbedingungen festgelegt werden können, sind besonders günstige Voraussetzungen für eine rationelle Massenproduktion gegeben.

Zur besseren Ausnutzung der zur Verfügung stehenden Fläche hat es sich als günstig erwiesen, wenn die Abdeckung des zweiten Wärmeträgerfluid-Kanals mit den Wärmeaustausch begünstigenden äußeren Rippen versehen ist.

Weitere Einzelheiten, Vorteile und Merkmale der Erfindung ergeben sich aus der folgenden Beschreibung und der Zeichnung, auf die bezüglich der Offenbarung aller nicht im Text beschriebenen Einzelheiten ausdrücklich verwiesen wird. Es zeigt:

Fig. 1    eine Schnittansicht eines Kollektorelementes der Einrichtung,

Fig. 2    eine schematische Draufsicht zur Veranschaulichung des Verlaufs der verschiedenen Wärmeträgerfluid-Kanäle eines Kollektorelementes,

Fig. 3    eine schematische Ansicht zur Veranschaulichung des Verlaufs und der gegenseitigen Zuordnung der Wärmeträgerfluid-Kanäle, und

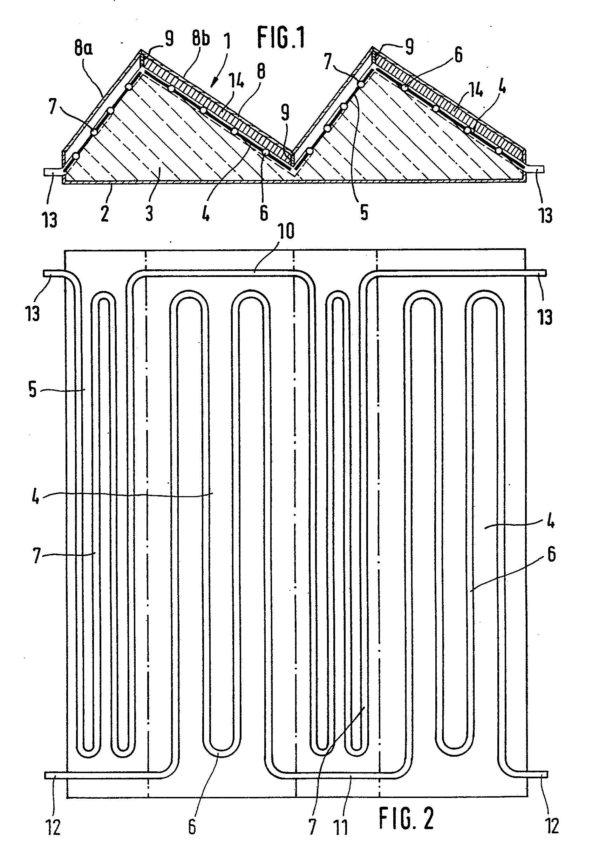

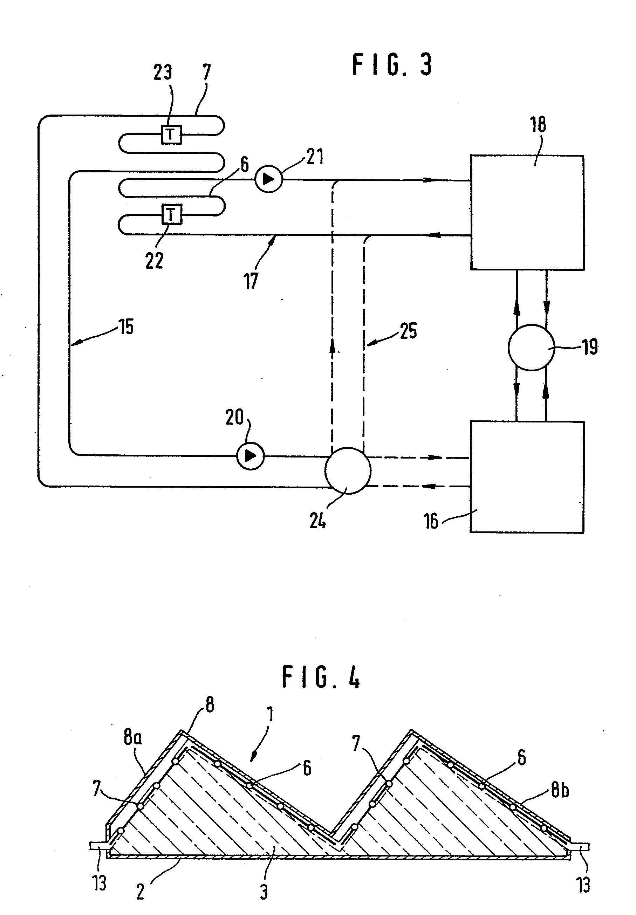

.Fig. 4 eine abgewandelte Ausführung des Kollektorelements nach Fig. 1.

Wie aus Fig, 1 der Zeichnung ersichtlich, besteht jedes Kollektorelement 1 aus einem korrosionsbeständigen Gehäuse 2, in dem auf einem hochwertigen Isolierkörper 3, vorzugsweise aus Polyurethan, in gegenseitigem Abstand gut wärmeleitende Blechstreifen 4 und 5 mit jeweils einem Kanal 6 bzw. 7 gelagert sind. Aufgrund der relativ hohen Stabilität des Isolierkörpers 3 kann auf das Gehäuse 2 auch verzichtet werden. Die Bleche 4 und 5 können beispielsweise aus Aluminium bestehen, um dessen gute Wärmeleitfähigkeit auszunutzen. Statt Aluminium könnte natürlich auch anderes Metall oder auch Kunststoff mit geeigneten Eigenschaften Verwendung finden. Zweckmäßigerweise wird in mindestens einen der beiden Blechstreifen eine Nut eingeprägt, die nach dem Abdecken durch den anderen Blechstreifen den Kanal 6 bzw. 7 bildet. Ein entsprechend größerer Kanalquerschnitt wird erzielt, wenn auch der zweite Blechstreifen mit einer auf die Nut des ersten Streifens abgestimmten Lage versehen ist. Auf der Außenseite der Blechstreifen 5 und 5 mit den Kanälen 6 bzw. 7 ist eine transparente Abdeckung 8 aus witterungsbeständigem Material, beispielsweise Acrylglas festgelegt. Aus Fig. 1 geht hervor, daß die Abdeckung 8 in einzelne, jeweils einen etwa rechten Winkel miteinander einschließende geneigte Flächen 8a, 8b aufgegliedert ist, von denen die eine Fläche 8a mit der durch den Boden des Gehäuses 2 gebildeten Basis einen steilen Winkel in der Größenordnung von 60° und die andere einen flachen Winkel in der Größenordnung von mindestens 30° einschließt. In der gleichen Weise sind die Bleche 4 und 5 unterhalb der Flächen 8a bzw. 8b der Abdeckung 8 in Bezug zur Basis geneigt. Die Kammern zwischen den Abdeckungsflächen und den Blechen sind durch Stege 9 voneinander getrennt, um eine Luftzirkulation zu den jeweils unbestrahlten, kälteren Kammern hin zu unterbinden.

In Fig. 1 ist eine Ausführungsform mit Unterteilung in zwei Paare von nebeneinander angeordneten Blechstreifen 4 und 5 mit Kanälen 6 bzw. 7 sowie den Abdeckungsflächen 8a und 8b veranschaulicht. Durch diese Unterteilung läßt sich die Höhe der Längskanten der Flächen 8a, 8b, d.h. deren Abstand von der Basis auch bei Wahl einer Kollektorelementbreite von ca. 1,50 m relativ klein halten. Eine weitere Verringerung der Höhe, die die Einsatzmöglichkeit derartiger Kollektorelemente in ästhetischer Hinsicht begünstigt, ergibt sich bei weiterer Unterteilung.

Aus Fig. 2 geht hervor, daß die Kanäle 7 der den steilen Flächen 8 zugeordneten schmaleren Blechstreifen 5 über eine am hinteren Ende des Kollektorelementes 1 vorgesehene Verbindungsleitung 10 verbunden sind. In entsprechender Weise ist am vorderen Ende des Kollektorelementes 1 eine Verbindungsleitung 11 vorgesehen, über die die Kanäle 6 der den flach geneigten Abdeckungsflächen 8b zugeordneten Blechstreifen 4 in Verbindung stehen. Die Kanäle 6 der Blechstreifen 4 weisen Zu- und Ableitungen 12 auf, die Kanäle 7 der Blechstreifen 5 entsprechende Zu- und Ableitungen 13. Über die Zu- und Ableitungen 12 bzw. 13 lassen sich die nebeneinander liegenden Kollektorelemente 1 miteinander kuppeln. Die Zu- und Ableitungen können statt seitlich auch abweichend von der Anordnung gemäß Fig. 2 bzw. zusätzlich zu dieser stirnseitig der Kollektorelemente 1 münden, um letztere in Reihe liegend miteinander zu verbinden.

Die beschriebenen Kolektorelemente 1 lassen sich entweder auf einer hotozontalen Fläche, beispielsweise einem Flachdach, oder an einer vertikalen Wand auf nicht näher veranschaulichte Weise festlegen. Bei Anordnung an einer vertikalen Wand wird die flachere Fläche 8b und damit der Blechstreifen 4 zur Sonne hin ausgerichtet. Bei horizontaler Anordnung ist dagegen die steilere Fläche 8a und damit der schmalere Blechstreifen 5 nach Süden zur Sonne hin gewandt; in diesem Fall werden nur die Kanäle

0054729

-7-

7 an das zu einem Energiespeicher führende Wärmeträgerfluidnetz angeschlossen. Nur sie dienen dann jeweils
als eigentliche Sonnenkollektoren. Die auf der Schattenseite befindlichen und somit kälteren Blechstreifen 4
mit den Kanälen 6 sind in diesem Fall auf nachstehend
erläuterte Weise an einen gesonderten Wärmeträgerfluidkreislauf angeschlossen. Um eine gute Wärmeleitfähigkeit
zur Außenseite zu schaffen, sind die zugeordneten Kammern
mit Metallwolle, Metallpaste oder einem anderen gut wärmeleitenden Medium 14 gefüllt. Handelt es sich um Kollektorelemente 1 zur Montage an in einem Bereich von etwa 30°
geneigten Flächen, beispielsweise Süddächern, dann bedarf
es der Montage der Kollektorelemente 1 in um 180° verschwenkter Lage. In diesem Fall sind ihre breiteren Blechstreifen 4 mit den Kanälen 6 optimalen Einstrahlungsbedingungen ausgesetzt, und die Klammern oberhalb der Blechstreifen 5 mit den Kanälen 7 müssen mit dem gut wärmeleitenden Medium gefüllt sein. Dies gilt auch bei Anordnung
dieser Kollektorelemente an einer vertikalen Wand.

Wie aus Fig. 3 ersichtlich, ist der erste Wärmeträgerfluid-Kanal 7, der bei horizontaler Anordnung gemäß
dem Ausführungsbeispiel nach Fig. 1 mit seiner steileren
Fläche der Sonne zugewandt ist, über eine Verbindungsleitung 15 mit einem Exergiespeicher 16 verbunden. Der zweite,
quer zur Sonneneinstrahlung ausgerichtete Wärmeträgerfluid-Kanal 6, der gemäß Fig. 2 über das wärmeleitende
Medium 14 mit der Umgebungsluft in Berührung steht, ist
über eine Verbindunsgleitung 17 an einen Anergiespeicher
18 angeschlossen. Dieser Anergiespeicher 18 ist mit dem
Exergiespeicher 16 über eine Wärmepumpe 19 verbunden.
Die Verbindungsleitungen 15 und 17 enthalten im jeweiligen
Vorlaufstrang eine Pumpe 20 bzw. 21. Jedem Wärmeträgerfluid-Kanal 6 bwz. 7 ist ein Temperaturfühler 22 bzw. 23
zugeordnet. Der Temperaturfühler 23 steht über nicht näher
veranschaulichte Steuerelemente mit einem Umsteuerventil
24 in der Verbindungsleitung 15 und der Pumpe 20 im Vorlaufstrang der Verbindungsleitung 15 in Verbindung. Der dem Wärmeträgerfluid-Kanal 6 zugeordnete Temperaturfühler 22 ist über ebenfalls nicht veranschaulichte Steuerelemente mit der Pumpe 21 im Vorlauf der Verbindungsleitung 17 verbunden. Dem Umsteuerventil 24 ist eine Querleitung 24 zugeordnet, über die das Wärmeträgerfluid aus dem Kanal 7 statt zum Exergiespeicher zum Anergiespeicher 18 führbar ist.

Mit Hilfe der in Fig. 3 veranschaulichten Einrichtung sind folgende Betriebsweisen möglich. Bei Normalbetrieb, d.h. bei Sonneneinstrahlung und relativ warmer Witterung ist der Kanal 7 bei horizontaler Anordnung über die Verbindungsleitung 15 und das Umsteuerventil 24 mit dem Exergiespeicher verbunden, dem die Pumpe 20 das Wärmeträgerfluid zuführt; der Kanal 6 steht dann über die Verbindungsleitung mit dem Anergiespeicher 18 in Verbindung, dem die Pumpe 21 das Wärmeträgerfluid zuleitet.

Ändern sich die Witterungsbedingungen, und die Temperatur im Bereich des Wärmeträgerfluid-Kanals 7 fällt unter einen vorbestimmten Grenzwert beispielsweise von 45°C, dann sorgen die dem Temperaturfühler 23 zugeordneten Steuerelemente dafür, daß das Umsteuerventil 24 die Verbindungsleitung zum Exergiespeicher 16 trennt und stattdessen die Querleitung 25 zum Anergiespeicher 18 öffnet. Es kann auch der Fall eintreten, daß bei relativ kühler Witterung, jedoch starker Sonneneinstrahlung der Wärmeträgerfluid-Kanal 7 mit dem Exergiespeicher 16 in Verbindung bleibt, da die Temperatur von 45°C nicht unterschritten wird, gleichzeitig jedoch die Temperatur im Wärmeträgerfluid-Kanal 6 auf einem Wert unter dem wirtschaftlich sinnvollen Grenzwert von beispielsweise 5°C bleibt. In diesem Fall wird einfach die Pumpe 21 stillgesetzt, damit dem Anergiespeicher 18 nicht Wärmeträgerfluid einer Temperatur zugeleitet wird, die unter der vorbestimmten Mindesttemperatur liegt.

-9-

Lediglich an extrem kalten Tagen ohne Sonneneinstrahlung wird der Fall eintreten, daß beide Temperaturfühler 22 und 23 für einen Stillstand beider Pumpen 20 und 21 sorgen, da im Wärmeträgerfluid-Kanal 7 nicht einmal die Mindesttemperatur von 5°C erreicht wird, die eine Betätigung des Umsteuerventils 24 für den Anschluß des Anergiespeichers 18 über die Querleitung 25 sinnvoll erscheinen läßt.

Fig 4 veranschaulicht eine besonders zweckmäßige weitere Ausgestaltung des Kollektorelementes 1 nach Fig. 1. Bei dieser Ausführung ist die Abdeckung 8 mit den den Neigungen der aufeinanderfolgenden Wärmeträgerfluid-Kanälen angepaßten Abdeckungsabschnitten derart relativ zu den Kanälen versetzt angeordnet und festgelegt, daß die dem zweiten Wärmeträgerfluid-Kanal 6 zugeordneten Abdeckungsabschnitte 8b mit dem Kanal praktisch in Berührung stehen. Demgegenüber begrenzen die dem ersten Wärmeträgerfluid-Kanal 7 zugeordneten Abdeckungsabschnitte 8a, die im Abstand von diesen verlaufen, eine wärmeisolierende Kammer. Diese Ausführung ist für einen Einsatz der Kollektorelemente gedacht, bei dem die Kanäle 7 der Sonne zugewandt sind, um bei Normalbetrieb an den Exergiespeicher 16 angeschlossen zu sein, während die Kanäle 6 mit dem Anergiespeicher 18 in Verbindung stehen. Stattdessen ist auf ähnlich einfache Weise eine Ausführung eines Kollektorelementes mit gleicher Abdeckung herstellbar, das mit seinen Kanälen 6 der Sonne zugewandt sein soll, um als Sonnenkollektor zu dienen. In diesem Fall bedarf es lediglich einer seitlich versetzten Anordnung und Festlegung der Abdeckung auf eine solche Weise, daß die Abdeckungsabschnitte 8a an den Kanälen 7 in Berührung gelangen, wogegen die Kanäle 6 mit den Abdeckungsabschnitten 8b jeweils wärmeisolierende Kammern begrenzen

-1-

Patentansprüche:

1. Einrichtung zur Umsetzung von Sonnenenergie
in Wärme, mit einem Sonennkollektor aus einer Mehrzahl
von an der Außenseite eines Gebäudes od.dgl. festlegbaren, miteinander kuppelbaren, an ein Wärmeträgerfluidnetz anschließbaren Kollektorelementen (1), die jeweils
einen Wärmeträgerfluid-Kanal (7) mit einer transparenten Abdeckung (8) umfassen, dadurch gekennzeichnet, daß
der Wärmeträgerfluid-Kanal (7) aus einer Normalbetriebsstellung, in der er mit einem Exergiespeicher (16) verbunden ist, bei Unterschreiten einer vorbestimmten, mittels
eines dem Wärmeträgerfluid-Kanal zugeordneten Temperaturfühlers (23) festgestellten Mindesttemperatur des zirkulierenden Wärmeträgerfluids über ein Umsteuerventil
(24) vom Exergiespeicher (16) trennbar und an einen
Anergiespeicher (18) für Wärmepumpenbetrieb anschließbar ist.

2. Einrichtung nach Anspruch 1, dadurch gekennzeichnet, daß der Anergiespeicher (18) mit dem Exergiespeicher (16) über eine Wärmepumpe (19) in Verbindung
steht.

3. Einrichtung nach Anspruch 1 oder 2, bei der
jedes Kollektorelement (1) zwei einen rechten Winkel
miteinander einschließende geneigte Flächen (8a, 8b)
umfaßt, welche mit der Basis einen spitzen Winkel
einschließen, gekennzeichnet durch Kombination folgender Merkmale:

    a)   die eine der beiden Flächen (8a) der Kollektorelemente (1) schließt mit der Basis einen
        steilen Winkel in der Größenordnung von ca.
        60° und die andere (8b) einen flachen Winkel
        in der Größenordnung von ca. 30° ein und

-2-

b)   jeder der beiden geneigten Flächen  (8a, 8b)
ist ein eigener, in einer Ebene gleicher
Neigung liegender Wärmeträgerfluid-Kanal
(7, 6) zugeordnet, von denen der erste mit
seiner geneigten Fläche der Sonne zugewandte
Kanal der bei Normalbetrieb mit einem  Exergiespeicher (16) verbundene Kanal (7) ist
und der zweite, quer zur Sonneneinstrahlung ausgerichtete Kanal (6) über ein wärmeleitendes Medium (14) mit der Umgebungsluft in Berührung steht und über eine zweite, eine Pumpe  (21) enthaltende Verbindungsleitung (17) an den Anergiespeicher
(18) für Wärmepumpenbetrieb angeschlossen
ist.


4.   Einrichtung nach Anspruch 3, dadurch gekennzeichnet, daß die Abdeckung des zweiten Wärmeträgerfluid-Kanals (6) mit den Wärmeaustausch begünstigenden
äußeren Rippen versehen ist.


5.   Einrichtung nach einem der Ansprüche 2
bis 4, dadurch gekennzeichnet, daß dem Wärmeträgerfluid-Kanal (6), der der Sonne abgewandt ist, ein Temperaturfühler (22) zugeordnet ist, mit  dessen Hilfe
bei Unterschreiten einer vorbestimmten Mindesttemperatur die im Verlauf der zweiten Verbindungsleitung
(17) liegende Pumpe (21) abschaltbar ist.


6.   Einrichtung nach einem der Ansprüche 1
bis 5, dadurch gekennzeichnet, daß die Kanalstränge
der Wärmefluid-Kanäle (6 bzw. 7) jeweils miteinander
durch den Zwischenraum zwischen den Kanalsträngen
überbrückende, vorzugsweise metallische Verbindungen
ausgefüllt sind.

7. Einrichtung nach Anspruch 6, dadurch gekennzeichnet, daß jeder Wärmeträgerfluid-Kanal (6 bis 7) durch Einprägen einer Nut in einen ersten Material-, vorzugsweise Blechstreifen gebildet ist, der mit einem zweiten, den ersten abdeckenden Blechstreifen verbunden ist.

8. Einrichtung nach einem der Ansprüche 3 bis 7, dadurch gekennzeichnet, daß zwischen den Wärmeträgerfluid-Kanälen und der Abdeckung jeweils Kammern vorhanden sind und daß der zweite Wärmeträgerfluid-Kanal mit der Abdeckung über ein den Isoliereffekt der Luft in der Kammer ausschaltendes wärmeleitendes Medium (14) verbunden ist.

9. Einrichtung nach Anspruch 8, dadurch gekennzeichnet, daß das die Kammer ausfüllende wärmeleitende Medium (14) durch Metallwolle bzw. eine metallische Paste gebildet ist.

10. Einrichtung nach einem der Ansprüche 3 bis 9, gekennzeichnet durch eine derart versetzte Anordnung und Festlegung der Abdeckung (8) mit den den Neigungen der aufeinanderfolgenden Wärmeträgerfluid-Kanäle (6 bzw. 7) angepaßten Abdeckungsabschnitten (8b bzw. 8a) relativ zu den Kanälen, daß jeweils die dem zweiten Wärmeträgerfluid-Kanal (6) zugeordneten Abdeckungsabschnitte (8b) mit dem Kanal praktisch in Berührung stehen, wogegen die dem ersten Wärmeträgerfluid-Kanal (7) zugeordneten, im Abstand von diesen verlaufenden Abdeckungsabschnitte (8a) eine wärmeisolierende Kammer begrenzen.

11. Einrichtung nach einem der Ansprüche 3 bis 10, dadurch gekennzeichnet, daß die Wärmeträgerfluid-Kanäle (6 bzw. 7) auf geneigten Außenflächenabschnitten eines Isolierkörpers (3) aus hochwertigem Isoliermaterial, vorzugsweise Polyurethan angeordnet sind.

## FIG.1

## FIG. 2

# FIG. 3

# FIG. 4

# 0054729

Europäisches
Patentamt

**EUROPÄISCHER RECHERCHENBERICHT**

Nummer der Anmeldung

EP 81 10 9376

| Kategorie | Kennzeichnung des Dokuments mit Angabe, soweit erforderlich, der maßgeblichen Teile | betrifft Anspruch |
|---|---|---|
| X | US - A - 2 713 252 (JACKSON) <br> * Von Spalte 3, Zeile 41 bis Spalte 6, Zeile 8, Figur * | 1,2,5 |
| A | FR - A - 2 450 425 (BERNIER) <br> * Seite 2, Zeilen 9-29; Figuren 2,3 * | 7,8 |
| A | DE - A - 2 828 170 (RINGER) <br> * Seiten 5 und 6; Figuren 1,2 * | 1,3,11 |
| PA | EP - A - 0 025 212 (KIRCHMAYER) <br> * Seiten 5,6,7,8; Figuren 1,2 * | 1,3,6, 11 |

**EINSCHLÄGIGE DOKUMENTE**

**KLASSIFIKATION DER ANMELDUNG (Int Cl. )**

F 24 D 11/02
F 24 J 3/02

**RECHERCHIERTE SACHGEBIETE (Int Cl. )**

F 24 D
F 24 J

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-04-1982 | PERROTTA |

EPA form 1503.1   06.78